# EUROPÄISCHE PATENTANMELDUNG

(11) **EP 4 675 750 A1**
(43) Veröffentlichungstag der Anmeldung: **07.01.2026**
(21) Anmeldenummer: 24185682.2
(22) Anmeldetag: 01.07.2024
(51) Int. Cl.: H01M 10/42, H01M 50/503, H01M 50/516, H01M 50/519

(54) **VERBINDUNGSELEMENT UND LEITERPLATTE FÜR EIN BATTERIEPACK, BATTERIEPACK SOWIE VERFAHREN ZU DEREN HERSTELLUNG**

(71) Anmelder: Akku Power GmbH, 73614 Schorndorf (DE)
(72) Erfinder: BOHNENBERGER, Julian, 73655 Plüderhausen (DE)
(74) Vertreter: Patentanwälte Ruff, Wilhelm, Beier, Dauster & Partner mbB

(57) **Zusammenfassung**

Die Erfindung betrifft ein Verbindungselement für eine Leiterplatte für ein Batteriepack, eine Leiterplatte für ein Batteriepack und ein Batteriepack mit mindestens einer Batteriezelle, wobei das Verbindungselement (10) einen Bodenabschnitt (12) zur elektrischen und mechanischen Verbindung mit der Batteriezelle und einen schräg von dem Bodenabschnitt (12) abragenden Randabschnitt (13) zur elektrischen und mechanischen Verbindung mit der Leiterplatte aufweist, und wobei das Verbindungselement (10) aus einem elektrische leitenden, lötbaren und/oder schweißbaren Material hergestellt ist und/oder zumindest abschnittsweise eine schweißbare, lötbare und/oder elektrisch leitende Beschichtung aufweist. Die Erfindung betrifft weiter ein Verfahren zur Herstellung einer Leiterplatte und ein Verfahren zur Herstellung eines Batteriepacks. Außerdem betrifft die Erfindung eine Verwendung einer Leiterplatte zur Herstellung eines Batteriepacks.

## Beschreibung

### ANWENDUNGSGEBIET UND STAND DER TECHNIK

Die Erfindung betrifft ein Verbindungselement für eine Leiterplatte für ein Batteriepack, eine Leiterplatte für ein Batteriepack und ein Batteriepack mit mindestens einer Batteriezelle. Die Erfindung betrifft weiter ein Verfahren zur Herstellung einer Leiterplatte und ein Verfahren zur Herstellung eines Batteriepacks. Außerdem betrifft die Erfindung eine Verwendung einer Leiterplatte zur Herstellung eines Batteriepacks.

Als Batteriepack oder Akkupack wird eine Einheit umfassend eine Batteriezelle oder mehrere Batteriezellen, die parallel oder seriell miteinander verschaltet sind, bezeichnet. Derartige Batteriepacks sind allgemein bekannt.

Zur Herstellung eines Batteriepacks ist aus DE 10 2017 131092 A1 eine Leiterplatte zur elektrischen Kontaktierung mit einem Kontaktpol einer Batteriezelle, die ein Paar von Kontaktpolen aufweist, bekannt, wobei die Leiterplatte für jeden Kontaktpol eine Kontaktbohrung aufweist, und wobei in einem montierten Zustand der Kontaktpol in die Kontaktbohrung der Leiterplatte hineinragt und eine elektrisch leitende Verbindung zwischen dem Kontaktpol und der Leiterplatte mittels eines Verbindungselements hergestellt ist.

### AUFGABE UND LÖSUNG

Es ist eine Aufgabe der vorliegenden Erfindung ein Verbindungselement, eine Leiterplatte und ein Batteriepack zu schaffen, welche einfach produzierbar sind bei gleichzeitig hoher Verbindungssicherheit, sowohl elektrisch als auch mechanisch. Zudem ist es eine Aufgabe der vorliegenden Erfindung, ein geeignetes Verfahren zur Herstellung einer Leiterplatte und zur Herstellung eines Batteriepacks zu schaffen, mit welchen sich das Verbindungselement, die Leiterplatte und das Batteriepack einfach und kostengünstig herstellen lassen, um entsprechende mechanische und elektrische Verbindungsmöglichkeiten zu schaffen. Nicht zuletzt ist eine Aufgabe der Erfindung eine Verwendung einer Leiterplatte zu schaffen.

Diese und weitere Aufgaben werden gelöst durch das Verbindungselement gemäß Anspruch 1, die Leiterplatte gemäß Anspruch 7, den Batteriepack gemäß Anspruch 10, das Verfahren zur Herstellung einer Leiterplatte gemäß Anspruch 11, das Verfahren zur Herstellung eines Batteriepacks gemäß Anspruch 13 und die Verwendung gemäß Anspruch 15. Vorteilhafte Weiterbildungen der Erfindung sind in den abhängigen Ansprüchen angegeben.

Gemäß einem ersten Aspekt wird ein Verbindungselement für eine Leiterplatte für ein Batteriepack mit mindestens einer Batteriezelle geschaffen, wobei das Verbindungselement einen Bodenabschnitt zur elektrischen und mechanischen Verbindung mit der Batteriezelle und einen schräg davon abragenden Randabschnitt zur elektrischen und mechanischen Verbindung mit der Leiterplatte aufweist, wobei das Verbindungselement aus einem elektrische leitenden, lötbaren und/oder schweißbaren Material hergestellt ist und/oder eine schweißbare, lötbare und/oder elektrisch leitende Beschichtung aufweist.

Das Verbindungselement, auch als PCB-Tab (PCB als Abkürzung für engl. Printed Circuit Board, deutsch Leiterplatte) bezeichnet, dient zur elektrischen Verbindung einer Batteriezelle mit einer Leiterplatte. Derartige Verbindungselemente erlauben eine einfache Verbindung einer oder mehrerer Batteriezellen mit einer Leiterplatte. Die Leiterplatte ist je nach Anwendungsfall geeignet konfigurierbar. Die Verwendung der Leiterplatte für den Aufbau des Batteriepacks erlaubt so eine hohe Flexibilität in der Gestaltung der Batteriezellen. Die Verbindungselemente sind für eine flexible Konfiguration eines Batteriepacks und damit einem flexiblen Aufbau eines Batteriepacks als separate Einzelteile gestaltet, welche mechanisch und elektrisch einerseits mit der Leiterplatte und andererseits mit der Batteriezelle, genauer einem Pol der Batteriezelle verbunden werden. Sofern mehrere Verbindungselemente in einem Batteriepack verbaut werden, sind diese je nach Anwendungsfall gleich oder unterschiedlich gestaltet. Dabei erlaubt insbesondere die Verwendung baugleicher Verbindungselemente zum Aufbau unterschiedlicher Batteriepacks mit unterschiedlicher Zellenanzahl und/oder unterschiedlicher Verschaltung der Batteriezellen und so eine Reduktion einer Teilevielfalt.

Da mittels des Verbindungselements eine sichere mechanische und elektrisch leitende Verbindung zwischen der Batteriezelle und der Leiterplatte hergestellt werden soll, ist das Verbindungselement aus einem elektrisch leitenden und schweiß- und/oder lötbaren Material hergestellt und/oder umfasst eine Beschichtung aus einem elektrisch leitenden und schweiß- und/oder lötbaren Material. Dabei können unterschiedliche Bereiche des Verbindungselements, beispielsweise eine Oberseite und eine Unterseite, und/oder unterschiedliche Abschnitte oder Teile, beispielsweise der Bodenabschnitt und der Randabschnitt, unterschiedliche Beschichtungen, insbesondere Beschichtungen aus unterschiedlichen Materialen aufweisen.

Das Verbindungselement ist insbesondere topfförmig, U-förmig oder winkelförmig ausgebildet. Das Verbindungselement weist einen Bodenabschnitt auf, welcher der Verbindung mit der Batteriezelle, insbesondere mit einem Pol einer Batteriezelle, dient. Von dem Bodenabschnitt ragt ein Randabschnitt schräg ab. Der Randabschnitt ist in Ausgestaltungen unterbrochen und weist mehrere, über den Umfang des Bodenabschnitts verteilte Elemente auf. Vorzugsweise ragt der Randabschnitt oder ragen die Elemente des Randabschnitts in Ausgestaltungen in einem Winkel von größer gleich 70° bis kleiner gleich 110° von dem Bodenabschnitt ab. Der Randabschnitt oder die Elemente des Randabschnitts dienen der Verbindung mit der Leiterplatte.

Für eine Herstellung eines Batteriepacks wird eine Batteriezelle, genauer ein Pol einer Batteriezelle, mit dem Bodenabschnitt des Verbindungselement mechanische und elektrisch verbunden. Vorzugsweise wird der Pol der Batteriezelle mit dem Bodenabschnitt des Verbindungselement verschweißt. Entsprechend ist der Bodenabschnitt aus einem schweißbaren und elektrisch leitenden Material hergestellt oder weist eine schweißbare und elektrisch leitende Beschichtung, zumindest im Bereich der Verbindung mit der Batteriezelle auf. Dabei wird die Batteriezelle an einer Seite des Bodenabschnitts angebracht, die gegenüber zu der Seite liegt, von der der Randabschnitt abragt.

Der Bodenabschnitt und der Randabschnitt sind in Ausgestaltungen getrennt gefertigt und miteinander verbunden. In Gestaltungen ist für eine einfache Fertigung das Verbindungselement einteilig gefertigt, beispielsweise als Stanz-Prägeteil.

In anderen Gestaltungen ist für bestimmte Anwendungen das Verbindungselement mehrteilig gefertigt. Die Fertigung eines mehrteiligen Verbindungselements erfolgt in Ausgestaltungen ebenfalls als Stanz-Prägeteil.

Als Ausgangsmaterial für das ein- oder mehrteilige Verbindungselement kann ein flächiges, dünnes Rohmaterial verwendet werden. In Ausgetaltungen wird in einem Stanz-Präge-Vorgang das flächige, dünne Rohmaterial ausgestanzt und in die gewünschte Form geprägt, sodass ein ein- oder mehrteiliges Verbindungselement mit einem Bodenabschnitt und einem Randabschnitt geschaffen wird. Der Vorgang kann bevorzugt in einem einzigen Arbeitsschritt erfolgen, sodass das Verbindungselement als fertig fallendes Teil ausgebildet ist. Eine Beschichtung lässt sich nachträglich aufbringen, ist aber bevorzugt, sofern vorhanden, bereits auf dem Rohmaterial aufgebracht.

In Ausgestaltungen umfasst das mehrteilige Verbindungselement zumindest ein erstes Bauteil und ein davon elektronisch getrenntes zweites Bauteil. Das mehrteilige Verbindungselement mit zwei elektronisch getrennten Bauteilen erlaubt eine Anbringung einer Batteriezelle mit ungleichnamigen Polen an einer Verbindungsseite zu der Leiterplatte. Die elektronisch getrennten Bauteile sind in Ausgestaltungen mechanisch für eine einfache Handhabung als ein Element verbunden. In anderen Ausgestaltungen sind die Bauteile elektronisch und mechanisch getrennt gestaltet.

In einer Ausführungsform ist vorgesehen, dass das Verbindungselement aus einem Trägermaterial mit den Hauptbestandteilen Kupfer, Stahl und/oder Nickel ausgebildet ist und/oder das Material für die leitende Beschichtung die Hauptbestandteile Nickel, Kupfer und/oder Silber aufweist. Dabei bilden in Ausgestaltungen die Bestandteile Kupfer, Stahl und/oder Nickel bzw. Nickel, Kupfer und/oder Silber - gesamt oder einzeln - einen Anteil an dem gesamten Material für das Verbindungselement oder für die Beschichtung von mehr als 50 Gewichtsprozent und/oder Volumenprozent. Insbesondere beträgt der Anteil der Hauptbestandteile an dem gesamten Material des Verbindungselements oder der Beschichtung mehr als 60 Gewichtsprozent und noch weiter insbesondere mehr als 70 Gewichtsprozent. Die vorstehend aufgeführten Materialien sind gut löt- und/oder schweißbar und weisen eine ausreichende elektrische Leitfähigkeit auf. Andere geeignete Materialen, die sowohl löt- und/oder schweißbar als auch elektrisch leitend sind, können ebenso verwendet werden. Geeignete Materialien sind solche, deren elektrische Leitfähigkeit im Bereich von +/- 10% der elektrischen Leitfähigkeit der vorgenannten Materialien liegen und die löt- und/oder schweißbar sind.

Der Bodenabschnitt ist entsprechend einem Verfahren, insbesondere einem Schweißverfahren, für die Verbindung mit der Batteriezelle durch den Fachmann geeignet gestaltet. Die Batteriezelle wird in Ausgestaltungen an einer Seite des Bodenabschnitts mit diesem verbunden, insbesondere verschweißt, welche dem abragenden Randabschnitt gegenüberliegt. Ein Werkzeug, insbesondere ein Schweißwerkzeug kann dabei über die Seite des abragenden Randabschnitts zugestellt werden.

Eine Ausführungsform sieht vor, dass der Bodenabschnitt eine ununterbrochene, ebene Bodenfläche aufweist. Durchbrüche, Spalte oder dergleichen sind in dieser Ausführungsform nicht in dem Bodenabschnitt vorgesehen. Eine ebene Bodenfläche ist insbesondere für eine Verbindung des Verbindungselements mit einer Batteriezelle mittels Laserschweißen vorteilhaft. Ein geeignetes Laserschweißverfahren ist dabei je nach Anwendungsfall durch den Fachmann wählbar. Insbesondere erfolgt in Ausgestaltungen ein Verbinden mittels Lasertiefschweißen. Die Verwendung eines Verbindungselements ist jedoch nicht auf Gestaltungen beschränkt, bei welchen das Verbindungselement mit der Batteriezelle mittels Laserschweißen, insbesondere mittels Lasertiefschweißen verbunden wird.

In einer anderen Ausgestaltung weist der Bodenabschnitt eine unterbrochene Bodenfläche mit mindestens zwei Bodenteilabschnitten auf. Bevorzugt ist der unterbrochene Bodenabschnitt symmetrisch ausgebildet, kann aber in einigen Ausführungsformen auch asymmetrisch ausgebildet sein. Die Bodenteilabschnitte sind in Ausgestaltungen gleich gestaltet. In anderen Ausgestaltungen sind unterschiedlich gestaltete Bodenteilabschnitte vorgesehen. In einer Ausführungsform ist ein Durchbruch vorgesehen, der den Bodenabschnitt in zwei Bodenteilabschnitte unterteilt. Die Bodenteilabschnitte sind jeweils mit dem Randabschnitt verbunden und sind zueinander durch den Durchbruch beabstandet. In anderen Ausführungsformen können mehrere Bodenteilabschnitte ausgebildet sein. Vorzugsweise ist der Durchbruch in einer Draufsicht etwa H-förmig oder Hantelförmig ausgebildet und die beiden Bodenteilabschnitte sind etwa rechteckig als abragende Laschen ausgebildet. Die Erfindung ist jedoch nicht auf diese Gestaltung beschränkt und andere Konturen sind möglich. Eine unterbrochene Bodenfläche ist insbesondere für eine Verbindung des Verbindungselements mit einer Batteriezelle mittels Widerstandschweißen vorteilhaft. Ein geeignetes Widerstandsschweißverfahren ist dabei je nach Anwendungsfall durch den Fachmann wählbar. Insbesondere erfolgt in Ausgestaltungen ein Verbinden mittels Widerstandspunktschweißen. Die Verwendung eines Verbindungselements mit unterbrochener Bodenfläche ist jedoch nicht auf Gestaltungen beschränkt, bei welchen das Verbindungselement mit der Batteriezelle mittels Widerstandsschweißen, insbesondere mittels Widerstandspunktschweißen verbunden wird. An den Bodenteilabschnitten sind in Ausgestaltungen Schweißgeometrien vorgesehen, wobei weiter insbesondere mindestens einer der Bodenteilabschnitte mindestens eine sich von dem Bodenteilabschnitt abhebende oder absenkende Schweißgeometrie oder Schweißkontur aufweist, insbesondere Schweißwarzen oder dergleichen aufweist.

Eine mechanische und elektrische Verbindung des Verbindungselements mit der Leiterplatte erfolgt in Ausgestaltungen über eine Steckverbindung mittels des Randabschnitts. Die Steckverbindung ist dabei in Ausgestaltungen derart gestaltet, dass der Randabschnitt form- und/oder kraftschlüssig mit der Leiterplatte verbunden werden kann. Alternativ oder zusätzlich ist der Randabschnitt in Ausgestaltungen mit dem Leiterplattenkörper stoffschlüssig verbindbar.

Der Randabschnitt kann als umlaufender Ring ausgebildet sein, sodass ein ununterbrochener Randabschnitt realisiert ist. Der Randabschnitt ist dabei beispielsweise durch Prägen, Stanzen oder ein anderes geeignetes Umformverfahren ausgebildet.

In anderen Ausgestaltungen ist der Randabschnitt umlaufend unterbrochen, wobei insbesondere der Randabschnitte mehrere voneinander umfänglich beabstandete Abragungen wie Stifte, auch als Pins bezeichnet, und/oder Laschen aufweist. Dabei können die Abragungen in Umfangsrichtung äquidistant zueinander beabstandet sein. In einer anderen Ausführung sind zumindest zwei der Abragungen nicht äquidistant zueinander beabstandet. Auch die Form der Abragungen kann unterschiedlich sein. So ist in einer Ausführungsform die Breite, das heißt die Erstreckung der Abragung in Umfangsrichtung, zumindest zweier Abragungen unterschiedlich zueinander ausgebildet. Bei einer unterbrochenen Ausführungsform des Randabschnitts können die Abragungen nur teilweise schräg abragend von dem Bodenabschnitt oder dem Absatz abragen. Dabei können zumindest zwei der Abragungen unterschiedlich schräg von dem Absatz oder dem Bodenabschnitt abragen.

Gemäß einem zweiten Aspekt wird eine Leiterplatte für ein Batteriepack mit mindestens einer Batteriezelle geschaffen, umfassend mindestens ein Verbindungselement mit dem Bodenabschnitt und dem Randabschnitt, wobei die Leiterplatte mindestens eine Aufnahme aufweist, in welcher der Randabschnitt für eine mechanische und elektrische Verbindung der Leiterplatte mit dem Verbindungselement aufgenommen ist.

An der Leiterplatte sind je nach Anwendung eine geeignete Anzahl an Verbindungselementen vorgesehen, welche eine Anbindung der Batteriezellen erlauben. Die Leiterplatte weist zudem Leiterbahnen auf, welche stromführende Elemente zwischen den einzelnen Batteriezellen sowie Endableitern des Batteriepacks bilden.

In Ausführungsformen ist ergänzend vorgesehen, dass die Leiterplatte weitere Elektronikkomponenten aufweist, insbesondere mindestens eine Steuereinheit, mindestens eine Sensoreinheit, mindestens eine Temperaturüberwachungseinheit und/oder dergleichen. Die weiteren Elektronikkomponenten dienen einer Überwachung und/oder einer Steuerung einer Energieabgabe und/oder -aufnahme eines Batteriepacks. Die Elektronikkomponenten sind dabei in Ausgestaltungen derart gestaltet, dass bei einer Gestaltung mit mehreren Batteriezellen eine Überwachung einzelner Batteriezellen möglich ist, wobei insbesondere die Elektronikkomponenten geeignet gestaltet sind, um eine individuelle elektrische Trennung einzelner oder mehrerer Batteriezellen von dem Batteriepack zu erlauben.

Für die mechanische Steckverbindung mit dem Verbindungselement weist die Leiterplatte jeweils eine Aufnahme je Verbindungselement auf. Die Aufnahmen können grundsätzlich eine beliebige Form aufweisen, wobei die Gestaltung der Aufnahme und des Randabschnitts komplementär gestaltet sind. Die Aufnahme umfasst in Gestaltungen Durchgangsschlitze, in welche der Randabschnitt oder die Elemente des Randabschnitts einsetzbar sind.

Dabei ist der Durchgangsschlitz an die Form des jeweiligen Randabschnitts angepasst, beispielsweise ist der Durchgangsschlitz bei einem ununterbrochenen ringförmigen Randabschnitt als ein ringförmiger Schlitz gestaltet oder der Durchgangsschlitz bei einem unterbrochenem Randabschnitt als komplementär angeordnete Durchgangs-Segmente oder Durchgangsschlitze gestaltet. Die Laschen des unterbrochenen Randabschnitts und die komplementär angerordneten Durchgangs-Segmente sind in Ausgestaltungen entlang eines Kreisrings angeordnet. In anderen Ausgestaltungen sind die Elemente entlang einer anderen Form, insbesondere entlang eines Polygons angeordnet.

Andere Formen der Aufnahmen sind denkbar, wobei insbesondere die Form der Aufnahme an eine Form eines Verbindungselements angepasst ist. In der Aufnahme oder den Aufnahmen ist das jeweilige Verbindungselement aufgenommen und mit der Leiterplatte verbunden. Die Verbindung mit dem Leiterplattenkörper ist sowohl für eine mechanische als auch eine elektrisch leitende Verbindung ausgebildet. Vorzugsweise ist der jeweilige Randabschnitt des Verbindungselement in die Aufnahme gesteckt und dort mit dem Leiterplattenkörper stoffschlüssig verbunden, insbesondere verlötet oder verschweißt.

Eine Höhe des Randabschnitts ist dabei in Ausgestaltungen größer als eine Dicke der Leiterplatte, sodass der eingesetzte Randabschnitt zumindest teilweise von der Leiterplatte an der dem Bodenabschnitt gegenüberliegenden Seite abragt. Dabei kann die Steckverbindung durch Umbiegen der Randabschnitte gesichert werden. Zusätzlich und/oder alternativ ist der Randabschnitt mit der Leiterplatte stoffschlüssig verbunden, beispielsweise verlötet oder verschweißt. Insbesondere ist der überragende Teil des Randabschnitts mit der Leiterplatte, genauer einer Leiterbahn der Leiterplatte verlötet oder verschweißt. Auf diese Weise ist eine sichere mechanische und elektrisch leitende Verbindung von Verbindungselement und Leiterplatte realisiert.

In einer Ausgestaltung ist die Batteriezelle vor der Verbindung des Verbindungselements mit der Leiterplatte mit diesem Verbindungselement verbunden, insbesondere verschweißt. In anderen Ausgestaltungen ist die Batteriezelle nach dem Verbindung des Verbindungselements mit der Leiterplatte mit diesem Verbindungselement verbunden, insbesondere verschweißt.

Damit die Batteriezelle mit dem Bodenabschnitt nach dessen Verbindung mit der Leiterplatte verbindbar ist, weist die Leiterplatte in Ausgestaltungen im Bereich des Bodenabschnitts eines aufgenommenen Verbindungselements einen Ausbruch mit offener oder geschlossener Kontur auf, durch welchen eine Schweißelektrode zu dem Bodenabschnitt führbar ist. Der Ausbruch ist bevorzugt als Durchgangsbohrung ausgeführt. Eine Fläche des Ausbruchs ist in Ausgestaltungen kleiner als eine Fläche des Bodenabschnitts, sodass der Bodenabschnitt abschnittsweise an der Leiterplatte anliegt. Die Aufnahme für das Verbindungselement kann an einem Rand der Leiterplatte oder beabstandet von einem Rand der Leiterplatte vorgesehen sein. Folglich kann die Aufnahme, insbesondere der Ausbruch eine offene Kontur oder eine geschlossene Kontur aufweisen. Die offene Kontur kann beispielsweise in einer Draufsicht als Halbkreis oder dergleichen ausgeführt sein. Eine geschlossene Kontur kann in einer Draufsicht beispielsweise eine Kreiskontur, eine Polygonkontur oder eine beliebige andere Kontur mit einem umlaufenden Rand sein. Vorzugsweise ist der Ausbruch als Sackbohrung, Topfbohrung oder Durchgangsbohrung ausgebildet, insbesondere als zylindrische Durchgangsöffnung. Der jeweilige Randabschnitt des Verbindungselements ist in die korrespondierenden, vorzugsweise den Ausbruch umgebende Aufnahme, beispielsweise umfassend mehrere Durchgangsschlitze, gesteckt.

In einer weiteren Ausführungsform ist alternativ oder ergänzend vorgesehen, dass zur elektrischen Anbindung des Verbindungselements die Aufnahme mit einem Lötauge ausgebildet ist, welches mit einer Leiterbahn verbunden ist. Um eine elektrisch leitende Verbindung der Verbindungselemente mit einer Leiterbahn der Leiterplatte ist die Aufnahme als Lötauge - englisch Footprint - gestaltet. Als Lötauge wird dabei ein elektrisch leitender Abschnitt bezeichnet, der eine Anbindung des Randabschnitts an die Leiterbahn mittels Löten erlaubt.

Gemäß einem dritten Aspekt wird ein Batteriepack geschaffen, umfassend eine Leiterplatte mit einem Verbindungselement und mindestens eine Batteriezelle, die mittels des Verbindungselements mechanisch und elektrisch leitend mit der Leiterplatte verbunden ist. Jede Batteriezelle weist in Ausgestaltungen ein Polpaar auf, wobei in einem Batteriepack mit mehreren Batteriezellen, die Batteriezellen mittels der Leiterplatte parallel und/oder seriell miteinander verschaltet sind. Leiterbahnen der Leiterplatte dienen dabei als stromführende Elemente zwischen den Batteriezellen. Die Verbindungselemente erlauben eine einfache und sichere elektrische und mechanische Verbindung der Leiterplatte mit den Batteriezellen. Die Batteriezellen sind in Ausgestaltungen als Rundzellen gestaltet. In anderen Ausgestaltungen weisen die Batteriezellen eine abweichende Gestaltung, beispielsweise einen prismatischen Querschnitt, auf. In einem Batteriepack mit mehreren Batteriezellen sind in Ausgestaltungen alle Batteriezellen gleich gestaltet. In anderen Ausgestaltungen sind unterschiedliche Batteriezellen in einem Batteriepack vorgesehen. Bei den Batteriezellen handelt es sich insbesondere um Lithium-Eisenphosphat-Batteriezellen (LFP-Zellen), Lithium-Ionen-Batteriezellen (Li-lon-Zellen) und/oder Sodium-Batteriezellen(Natrium- Batteriezellen), beispielsweise Natrium-Ionen- Batteriezellen oder Lithium-Natrium- Batteriezellen.

Gemäß einem vierten Aspekt wird ein Verfahren zur Herstellung einer Leiterplatte für ein Batteriepack mit mindestens einer Batteriezelle geschaffen, umfassend Verbinden mindestens eines Verbindungselements mit der Leiterplatte, sodass eine mechanische und elektrisch leitende Verbindung zwischen dem Verbindungselement und der Leiterplatte über die Aufnahme realisiert wird. Das Randelement des jeweiligen Verbindungselements wird in die entsprechende Aufnahme eingesetzt. Der jeweilige Randabschnitt wird mechanisch und elektrisch leitend mit den korrespondierenden Leiterbahnen der Leiterplatte verbunden, vorzugsweise mittels Stecken und Löten.

In einer Ausführungsform ist vorgesehen, dass das jeweilige Verbindungselement mittels Löten, insbesondere mittels Wellen-Löten, Reflow-Löten, THT-Löten, SMD-Löten, THR-Löten, und/oder mittels Schweißen, insbesondere mittels Laserschweißen, mit der Aufnahme verbunden wird. Auf diese Weise wird eine mechanische und elektrisch leitende Verbindung auf einfache Weise realisiert. Andere geeignete Verbindungsverfahren können eingesetzt werden. Die Aufnahmen sind von entsprechenden leitenden Bereichen der Leiterplatte umgeben, beispielsweise von Leiterbahnen. Beim Löten und/oder Schweißen wird das Verbindungselement mit den jeweiligen Leiterbahnen elektrisch leitend verbunden.

Gemäß einem fünften Aspekt wird ein Verfahren zur Herstellung eines Batteriepacks geschaffen, wobei mindestens eine Batteriezelle mit dem Verbindungselement verschweißt wird, insbesondere mittels Laserschweißen, Widerstandsschweißen, Ultraschallschweißen. Dabei wird die Batteriezelle mit einem entsprechenden Verbindungsbereich, insbesondere einem Pol, zu dem Bodenabschnitt geführt. Dort wird die Batteriezelle mit dem Bodenabschnitt verschweißt. Dabei wird die Batterie an eine Unterseite des Bodenabschnitts geführt. Die Unterseite ist die Seite, von welcher der Randabschnitt weg weist. Durch den Ausbruch wird eine Schweißelektrode von der Oberseite kommend zu dem Bodenabschnitt geführt. Die Oberseite liegt der Unterseite gegenüber.

Entsprechend ist in einer Ausführungsform vorgesehen, dass die mindestens eine Batteriezelle von einer Seite des Verbindungselements verschweißt wird, von welcher der Randabschnitt abragt. Dabei wird die Schweißelektrode durch den Ausbruch der Leiterplatte zu dem Bodenbereich positioniert. Unter Druck der Schweißelektrode gegen den Bodenabschnitt wird dann die Batteriezelle mit dem Bodenabschnitt verschweißt, sodass Bodenabschnitt und Batteriezelle mechanisch und elektrisch leitend miteinander verbunden sind.

Nicht zuletzt betrifft die Erfindung die Verwendung einer Leiterplatte für ein Batteriepack mit Batteriezellen, insbesondere mit Lithium-Ionen (kurz Li-lon)-, Lithium-Eisenphosphat (kurz LFP) -und/oder Sodium- Batteriezellen (Natrium-Batteriezellen), insbesondere bei deren serieller und/oder paralleler Verschaltung, insbesondere für eine Überwachung, eine Ausgleichung und/oder ein elektronisches Trennen einzelner oder aller Batteriezellen mittels Elektronikkomponenten wie Dioden, Sicherungen, MOSFETs und weiteren Komponenten.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: schematisch in einer Draufsicht ein Detail eines Batteriepacks umfassend eine Batteriezelle, zwei Leiterplatten und zwei Verbindungselemente;
- Fig. 2: schematisch in einer geschnittenen Seitenansicht entlang einer Schnittebene II-II gemäß Fig. 1 das Batteriepack gemäß Fig.1;
- Fig. 3: schematisch in einer Perspektivansicht ein Verbindungselement gemäß Fig. 1 mit einem Bodenabschnitt mit einer unterbrochenen Bodenfläche;
- Fig. 4: schematisch in einer Perspektivansicht eine Ausführungsform eines Verbindungselements mit einem Bodenabschnitt mit einer ununterbrochenen Bodenfläche;
- Fig. 5: schematisch in einer geschnittenen Seitenansicht eine Leiterplatte mit einem Verbindungselement gemäß Fig. 1;
- Fig. 6: schematisch in einer geschnittenen Perspektivansicht die Leiterplatte gemäß Fig. 5;
- Fig. 7: schematisch in einer Perspektivansicht einen Ausschnitt der Leiterplatte mit dem Verbindungselement gemäß Fig. 6;
- Fig. 8: schematisch in einer Draufsicht ein Detail eines Ausführungsbeispiels eines Batteriepacks umfassend eine Batteriezelle, eine Leiterplatte und ein Verbindungselement; und
- Fig. 9: schematisch in einer geschnittenen Seitenansicht entlang einer Schnittebene IX-IX gemäß Fig. 8 das Batteriepack gemäß Fig.8.

### DETAILLIERTE BESCHREIBUNG DER AUSFÜHRUNGSBEISPIELE

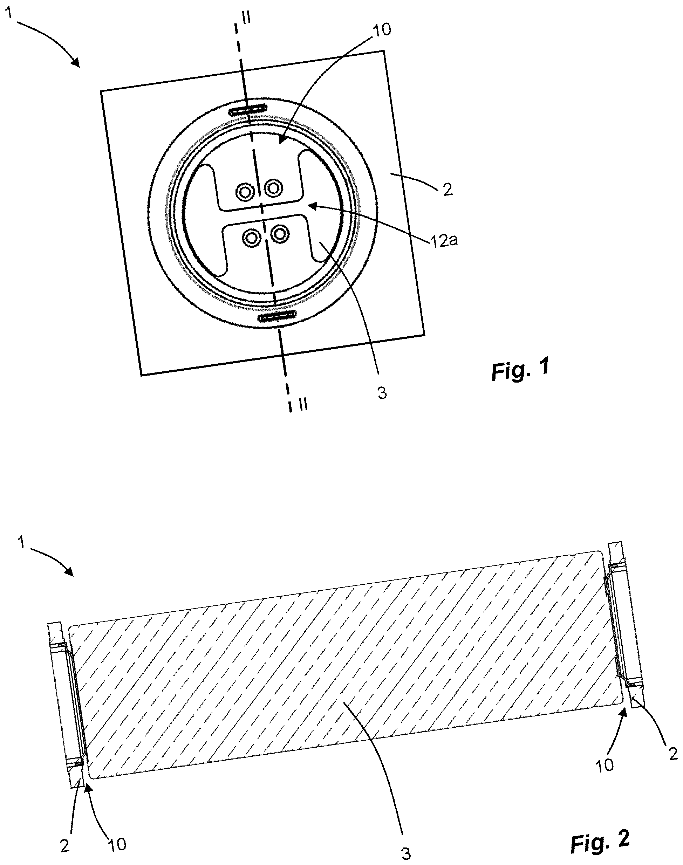

Die Fig. 1 bis 9 zeigen in verschiedenen Ansichten, Ausschnitten und Detaillierungsgraden Ausführungsbeispiele eines Batteriepacks sowie Ausführungsbeispiele von Verbindungselementen und eine Leiterplatte für ein Batteriepack, wobei das Batteriepack mindestens eine Batteriezelle, insbesondere mehrere Batteriezellen aufweist. Für gleiche oder ähnliche Bauteile werden übereinstimmende Bezugszeichen verwendet.

Fig. 1 und 2 zeigen schematisch in einer Draufsicht bzw. einer Schnittansicht ein Detail eines Batteriepacks 1 umfassend mindestens eine Batteriezelle 3. Das dargestellte Batteriepack 1 umfasst zwei Leiterplatten 2, welche an gegenüberliegenden Enden der Batteriezellen 3 mit dieser verbunden sind. Für eine Verbindung der Batteriezelle 3 mit den zwei Leiterplatten 2 ist jeweils ein Verbindungselement 10 vorgesehen. In dem in den Fig. 1 und 2 dargestellten Ausführungsbeispiel weisen die Verbindungselemente 10 jeweils eine unterbrochene Bodenfläche 12a auf.

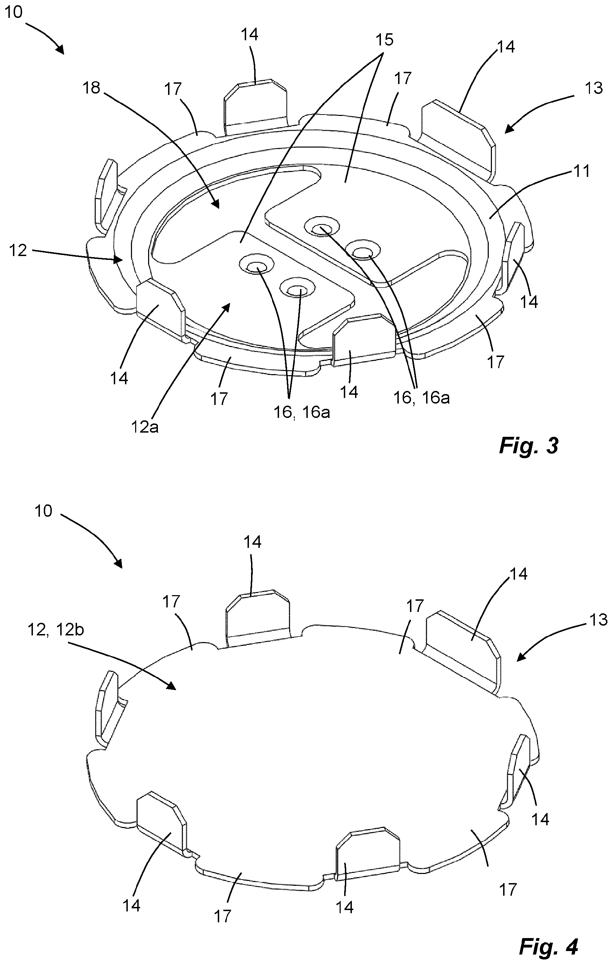

Fig. 3 zeigt schematisch in einer Perspektivansicht die Ausführungsform des Verbindungselements 10 gemäß Fig. 1 und 2. Das in den Fig. 1 bis 3 dargestellte Verbindungselement weist einen Bodenabschnitt 12 mit einer unterbrochenen Bodenfläche12a auf. Fig. 4 zeigt schematisch in einer Perspektivansicht eine alternative Ausführungsform eines Verbindungselements 10 mit einem Bodenabschnitt 12 mit einer ununterbrochenem Bodenfläche 12b.

Fig. 3 zeigt das Verbindungselement 10 in einer ersten Ausführungsform. Das dargestellte Verbindungselement 10 ist topfförmig und weist den Bodenabschnitt 12 und einen umlaufenden Randabschnitt 13 auf. Bodenabschnitt 12 und Randabschnitt 13 sind einteilig miteinander verbunden. Der Bodenabschnitt 12 weist im Übergang zu dem Randabschnitt 13 einen Absatz 11 auf, wobei die Bodenfläche 12a gegenüber dem Absatz 11 in einer Richtung weg von dem Randabschnitt 13 versetzt ist. Sowohl der Bodenabschnitt 12 als auch der Randabschnitt 13 sind unterbrochen ausgebildet. Die Bodenfläche 12a ist mittels eines Durchbruchs 18 unterbrochen, der die Bodenfläche 12a in zwei Bodenteilabschnitte 15 unterteilt. Dabei ist der Durchbruch 18 etwa H-förmig oder Hantelförmig ausgebildet. Die beiden resultierenden Bodenteilabschnitte 15 sind als etwa rechteckig Laschen ausgebildet. Der unterbrochene Randabschnitt 13 weist verschiedene Abragungen 14 auf. Diese sind ebenfalls als Laschen oder laschenartig ausgebildet. Zwischen den Abragungen 14 sind parallel zu der von dem Bodenabschnitt 12 aufgespannten Fläche nach außen abragende Vorsprünge 17 vorgesehen. Die Abragungen 14 ragen in etwa in einem rechten Winkel von dem Bodenabschnitt 12, genauer dem Absatz 11 ab. In der dargestellten Ausführungsform sind die Abragungen 14 und die Vorsprüngen alternierend in Umfangsrichtung angeordnet. Die Vorsprünge 17 unterteilen den Randabschnitt 13 in mehrere Elemente. Die etwa senkrechte abragenden Abragungen 14 sind hinsichtlich Ihrer Erstreckung in Umfangsrichtung unterschiedlich ausgebildet, bilden aber alle in etwa eine rechteckige, das heißt laschenartige Form aus. Die unterschiedliche Erstreckung in Umfangsrichtung erlaubt eine Codierung, sodass das Verbindungselement 10 in einer definierten Orientierung mit einer Leiterplatte 2 (vgl. Fig. 1 und 2) verbindbar ist. Der für eine Schweißverbindung ausgebildete Bodenabschnitt 12 weist für das Schweißen eine Schweißkontur 16 auf, die vorliegend als Schweißwarzen 16a ausgeführt ist. Die Schweißwarzen 16a sind an einem Endbereich des jeweiligen Botenteilabschnitts 15 angeordnet. Die Anzahl und Anordnung der Schweißwarzen 16a ist jedoch lediglich beispielhaft und andere Anordnungen sind denkbar.

Wie in den Fig. 1 und 2 erkennbar, sind die Bodenflächen 12a der Verbindungselemente 10 jeweils von der Oberseite der zugehörigen Leiterplatte 2 zugänglich, sodass ein Verbinden, insbesondere ein Verschweißen der Batteriezelle 3 mit den Verbindungselementen 10 jeweils von der Oberseite der Leiterplatte 2 möglich ist.

Fig. 4 zeigt eine zweite Ausführungsform des Verbindungselements 10 mit einem Bodenabschnitt 12 mit einer ununterbrochenen Bodenfläche 12b. Ein weiterer Unterschied zu der Ausführungsform nach Fig. 1 bis 3 ist, dass der Bodenabschnitt 12 keinen Absatz 11 aufweist und somit eine einzige Ebene aufspannt. Auch weist der Bodenabschnitt 12 keine Schweißwarzen 16a auf. Auch bei der Ausführungsform des Verbindungselements 10 gemäß Fig. 4 weist der Rand 13 mehrere Abragungen 14 sowie nach außen abragende Vorsprünge 17 auf.

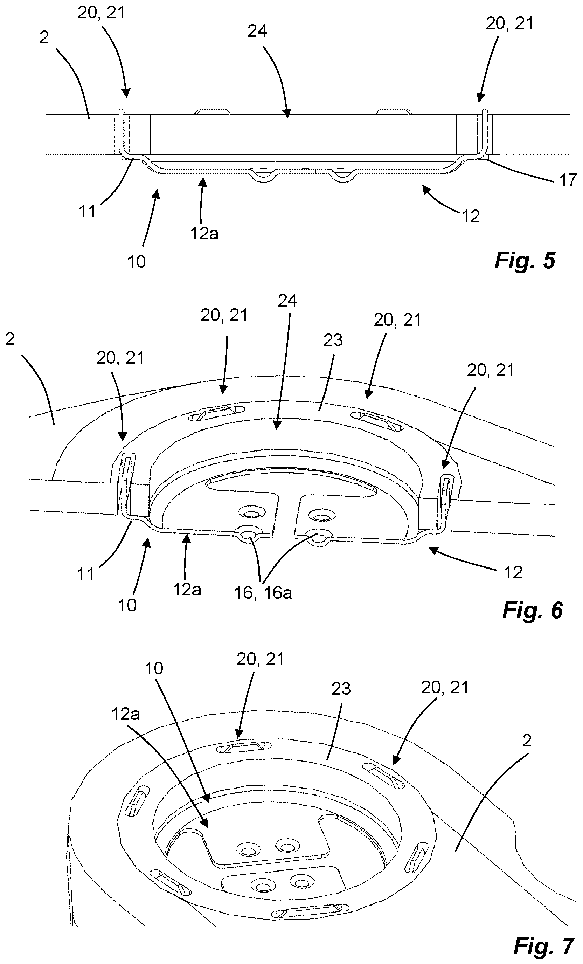

Fig. 5, 6 und 7 zeigen schematisch in einer geschnittenen Seitenansicht, einer geschnittenen Perspektivansicht und einer Perspektivansicht eine Leiterplatte 2 mit einem Verbindungselement 10 gemäß Fig. 1 bis 3.

Die Leiterplatte 2 weist nicht dargestellte Leiterbahnen auf. In Ausgestaltungen weist die Leiterplatte 2 zudem ebenfalls nicht dargestellte Elektronikkomponenten auf.

Der Leiterplatte 2 weist zur Anbindung des Verbindungselements 10 an die Leiterbahnen eine Aufnahme 20 auf. Die Aufnahme 20 umfasst in dem dargestellten Ausführungsbeispiel mehrere Durchgangsschlitze 21, in welche die Abragungen 14 eingesteckt sind. Die Anzahl und Anordnung der Durchgangsschlitze 21 ist komplementär zu der Anzahl und Anordnung der Abragungen 14, wobei wie oben erwähnt, die dargestellten Abragungen 14 eine Codierung umfassen, sodass das Verbindungselement 10 nur in einer definierten Orientierung mit der Leiterplatte 2 verbindbar ist.

Zum Verbinden sind die Abragungen 14 von einer Unterseite der Leiterplatte 2 in die Durchgangsschlitze 21 eingesteckt. Die Abragungen 14 sind länger als eine Dicke der Leiterplatte 2 und ragen an einer Oberseite der Leiterplatte 2 über die Durchgangsschlitze 21 hervor. Mit dem Absatz 11 sowie den Vorsprüngen 17 (vgl. Fig. 1 und 2) grenzt das Verbindungselement 10 an eine Unterseite der Leiterplatte 2 an. Der Absatz 11 und die Vorsprüngen 17 dienen so als Positionierungshilfe beim Einstecken der Abragungen 14 in die Durchgangsschlitze 21.

Wie am besten in Fig. 7 erkennbar, sind in dem dargestellten Ausführungsbeispiel die Durchgangsschlitze 21 entlang eines Kreises angeordnet und mittels eines zu dem Kreis konzentrischen, kreisringförmigen Lötauges 23 elektrisch leitend miteinander und mit einer nicht dargestellten Leiterbahn verbunden. Die Abragungen 14 sind für eine elektrische Verbindung des Verbindungselements 10 mit der Leiterplatte 2 mit dem Lötauge 23 mittels Löten, insbesondere mittels Wellen-Löten, Reflow-Löten, THT-Löten, SMD-Löten, THR-Löten, verbindbar.

Eine Verbindung des Verbindungselements 10 mit einer in Fig. 1 und 2 dargestellten Batteriezelle 3 erfolgt mittels des Bodenabschnitts 12. Für einen Zugang zu dem Bodenabschnitt 12 nach einer Verbindung des Verbindungselements 10 mit der Leiterplatte 2 weist die Leiterplatte 2 in einem dem Bodenabschnitt 12 gegenüberliegenden Bereich einen hier kreisrunden Ausbruch 24, hier in Form einer Durchgangsbohrung, auf.

Eine Fläche des Ausbruchs 24 ist kleiner als eine Fläche des Bodenabschnitts 12, sodass das Verbindungselement 10 an der Unterseite der Leiterplatte 2 anliegt. In dem dargestellten Ausführungsbeispiel sind der Bodenabschnitt 12 und der Ausbruch 24 jeweils kreisförmig, wobei - wie in Fig. 3 und 4 erkennbar - der Absatz 11 des Bodenabschnitt 12 außerhalb des Ausbruchs 24 an der Unterseite der Leiterplatte 2 anliegt.

Der Ausbruch 24 ist vorliegend derart bemessen, dass die gesamte Bodenfläche 12a von der Oberseite der Leiterplatte 2 zugänglich ist. Die Durchgangsschlitze 21 sind umfänglich um den Rand des Ausbruchs 24 positioniert und sowohl zueinander als auch zu dem Rand des Ausbruchs 24 etwa gleich beabstandet.

Der Bodenabschnitt 12 ist von beiden Seiten der Leiterplatte 2 zugänglich, sodass ein Verschweißen mit der Batteriezelle 3 (vgl. Fig. 1 und 2) im Bereich des Ausbruchs 24 realisierbar ist. Dabei wird die Batteriezelle 3 von der Unterseite der Leiterplatte 2 an den Bodenabschnitt 12 geführt. Von der entgegengesetzten Seite wird eine Schweißelektrode an die Bodenfläche 12a des Bodenabschnitts 12 durch den Ausbruch 24 geführt.

Für die Herstellung eines Batteriepacks ist eine Leiterplatte 2 mit einer entsprechend eines Anwendungsfalls gewählten Anzahl an Verbindungselementen 10 bestückbar, wobei anschließende die Batteriezellen mit den Verbindungselementen 10 verschweißbar sind.

Der Bodenabschnitt 12 des Verbindungselements 10 ist zu diesem Zweck je nach Schweißverfahren geeignet gestaltbar. Die Gestaltung gemäß Fig. 4 mit einer konturlosen, ebene Bodenfläche 12a ist insbesondere für ein Laserschweißen geeignet. Für ein Widerstandsschweißen ist dagegen eine unterbrochene Bodenfläche 12a gemäß Fig. 1 bis 3 vorgesehen.

Die Bodenabschnitte 12 der dargestellten Verbindungselemente 10 sind kreisförmig. Die Gestaltung ist jedoch lediglich beispielhaft und abweichende Gestaltungen sind ebenso denkbar.

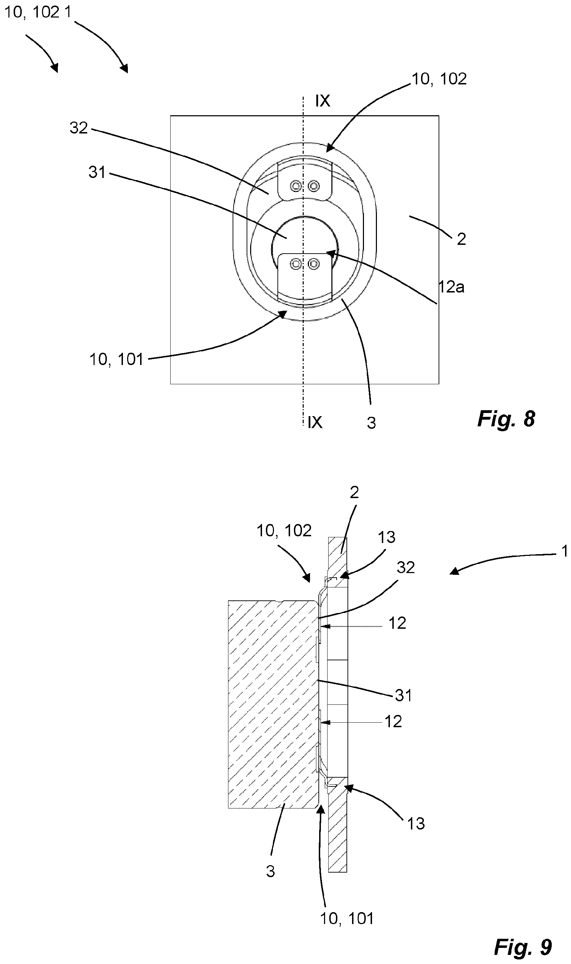

Fig. 8 und 9 zeigen schematisch in einer Draufsicht bzw. einer Schnittansicht ein Detail eines weiteren Ausführungsbeispiels eines Batteriepacks 1 umfassend mindestens eine Batteriezelle 3. Das dargestellte Batteriepack 1 umfasst mindestens eine Leiterplatte 2, welche an eine Ende der Batteriezelle 3 angeordnet und mit dieser verbunden ist. Für eine Verbindung der Batteriezelle 3 mit der Leiterplatte 2 ist ein Verbindungselement 10 vorgesehen. In dem in den

Fig. 8 und 9 dargestellten Ausführungsbeispiel ist ein mehrteiliges Verbindungselement 10 umfassend ein erstes Bauteil 101 und ein zweites Bauteil 102 vorgesehen. Die Bauteile 101, 102 sind elektronisch voneinander getrennt. Die in den Fig. 8 und 9 dargestellte Batteriezelle 3 umfasst an dem dargestellten Ende einen im Zentrum angeordneten ersten Pol 31, insbesondere eine Pluspol, und einen den ersten Pol 31 umgebenden, ungleichnamigen zweiten Pol 32, insbesondere einen Minuspol.

Die ungleichnamigen Pole 31, 32 sind jeweils mit einem Bauteil 101, 102 elektrisch und mechanisch verbunden, insbesondere mit diesem verschweißt, und mittels des Bauteils 101, 102 mit der Leiterplatte 2 elektrisch und mechanisch verbunden.

Die Bauteile 101, 102 sind in Ausgestaltungen mechanisch getrennt und jeweils L-förmig, umfassend einen Bodenabschnitt 12 zur elektrischen und mechanischen Verbindung mit einem Pol 31, 32 der Batteriezelle 3 und mit einem schräg von dem Bodenabschnitt 12 abragenden Randabschnitt 13 zur elektrischen und mechanischen Verbindung mit der Leiterplatte 2 ausgebildet. Die Randabschnitte 13 sind in dem dargestellten Ausführungsbeispiel derart kurz bemessen, dass die Randabschnitte 13 nicht von einer Oberseite der Leiterplatte 2 abragen. Die zugehörigen Aufnahmen der Leiterplatte 2 sind entsprechend als Sacklöcher gestaltet. In anderen Ausgestaltungen ragen die Randabschnitte 13 von der Oberseite der Leiterplatte 2 ab.

Die zwei Bauteile 101, 102 sind in Ausgestaltungen mechanisch getrennt gestaltet und jeweils winkelförmig. In anderen Ausgestaltungen sind die Bauteile 101, 102 mechanisch verbunden, sodass für eine stabile mechanische Anbindung der Batteriezelle 3 an die Leiterplatte 2 ein U-förmiges oder topfförmiges Verbindungselement 10 geschaffen wird.

Die dargestellten Ausführungsbeispiele sind lediglich beispielhaft und es sind zahlreiche Abwandlungen denkbar. Insbesondere können Merkmale einer Ausführungsformen mit denen einer anderen Ausführungsform kombiniert werden, um so weitere Ausführungsformen zu erhalten.

## Patentansprüche

1. Verbindungselement (10) für eine Leiterplatte (2) für ein Batteriepack mit mindestens einer Batteriezelle,
wobei das Verbindungselement (10) einen Bodenabschnitt (12) zur elektrischen und mechanischen Verbindung mit der Batteriezelle und einen schräg von dem Bodenabschnitt (12) abragenden Randabschnitt (13) zur elektrischen und mechanischen Verbindung mit der Leiterplatte aufweist, und
wobei das Verbindungselement (10) aus einem elektrische leitenden, lötbaren und/oder schweißbaren Material hergestellt ist und/oder zumindest abschnittsweise eine schweißbare, lötbare und/oder elektrisch leitende Beschichtung aufweist.

2. Verbindungselement (10) nach Anspruch 1, **dadurch gekennzeichnet, dass** das Verbindungselement (10) einteilig oder mehrteilig ist, wobei das mehrteilige Verbindungselement (10) insbesondere ein erstes Bauteil (101) und ein davon elektronisch getrenntes Bauteil (102) umfasst.

3. Verbindungselement (10) nach Anspruch 1 oder 2, **dadurch gekennzeichnet, dass** das Verbindungselement (10) aus einem Trägermaterial mit den Hauptbestandteilen Kupfer, Stahl und/oder Nickel gefertigt ist und/oder das Material für die leitende Beschichtung die Hauptbestandteile Nickel, Kupfer und/oder Silber aufweist.

4. Verbindungselement (10) nach Anspruch 1, 2 oder 3, **dadurch gekennzeichnet, dass** der Bodenabschnitt (12) eine ununterbrochene, ebene Bodenfläche (12b) aufweist.

5. Verbindungselement (10) nach Anspruch 1, 2 oder 3, **dadurch gekennzeichnet, dass** der Bodenabschnitt (12) eine unterbrochene Bodenfläche (12a) mit mindestens zwei Bodenteilabschnitten (15) aufweist, wobei insbesondere mindestens einer der Bodenteilabschnitte (15) mindestens eine sich von dem Bodenteilabschnitt (15) abhebende oder absenkende Schweißgeometrie (16) aufweist, insbesondere Schweißwarzen (16a) oder dergleichen aufweist.

6. Verbindungselement (10) nach einem der Ansprüche 1 bis 5, **dadurch gekennzeichnet, dass**
der Randabschnitt (13) umlaufend unterbrochen ist, wobei insbesondere der Randabschnitt (13) mehrere voneinander umfänglich beabstandete Abragungen (14) wie Stifte und/oder Laschen (17) aufweist.

7. Leiterplatte (2) für ein Batteriepack mit mindestens einer Batteriezelle, umfassend mindestens ein Verbindungselement (10) nach einem der Ansprüche 1 bis 6 mit dem Bodenabschnitt (12) und dem Randabschnitt (13), wobei die Leiterplatte (2) mindestens eine Aufnahme (20) aufweist, in welcher der Randabschnitt (13) für eine mechanische und elektrische Verbindung der Leiterplatte (2) mit dem Verbindungselement (10) aufgenommen ist.

8. Leiterplatte (2) nach Anspruch 7, **dadurch gekennzeichnet, dass** die Leiterplatte (2) im Bereich des Bodenabschnitts (12) eines aufgenommenen Verbindungselements (10) einen Ausbruch (24) mit offener oder geschlossener Kontur aufweist, wobei insbesondere eine Fläche des Ausbruchs (24) kleiner ist als eine Fläche des Bodenabschnitts (12), sodass der Bodenabschnitt (12) abschnittsweise an der Leiterplatte (2) anliegt.

9. Leiterplatte (2) nach Anspruch 7 oder 8, **dadurch gekennzeichnet, dass** zur elektrischen Anbindung des Verbindungselements (10) die Aufnahme (20) mit einem Lötauge ausgebildet ist, welches mit einer Leiterbahn verbunden ist.

10. Batteriepack, umfassend eine Leiterplatte (2) nach einem der Ansprüche 7 bis 9 und mindestens eine Batteriezelle, die mittels des Verbindungselements (10) mechanisch und elektrisch leitend mit der Leiterplatte (2) verbunden ist.

11. Verfahren zur Herstellung einer Leiterplatte (2) gemäß einem der Ansprüche 7 bis 9 für ein Batteriepack mit mindestens einer Batteriezelle, umfassend die Schritte:
Verbinden mindestens eines Verbindungselements (10) nach einem der Ansprüche 1 bis 6 mit der Leiterplatte (2), sodass eine mechanische und/oder elektrisch leitende
Verbindung zwischen dem Verbindungselement (10) und der Leiterplatte (2) über die Aufnahme (20) realisiert wird.

12. Verfahren nach Anspruch 11, **dadurch gekennzeichnet, dass**
das Verbindungselement (10) mittels Löten, insbesondere mittels Wellen-Löten, Reflow-Löten, THT-Löten, SMD-Löten, THR-Löten und/oder mittels Schweißen, insbesondere mittels Laserschweißen, mit der Leiterplatte (2) verbunden wird.

13. Verfahren zur Herstellung eines Batteriepacks nach Anspruch 10, **dadurch gekennzeichnet, dass**
die mindestens eine Batteriezelle mit dem Verbindungselement (10) verschweißt wird, insbesondere mittels Laserschweißen, Widerstandsschweißen, Ultraschallschweißen.

14. Verfahren nach Anspruch 13, **dadurch gekennzeichnet, dass**
die mindestens eine Batteriezelle von einer Seite des Verbindungselements (10) verschweißt wird, die gegenüber der Seite des Verbindungselements (10) liegt, von welcher der Randabschnitt (13) abragt.

15. Verwendung einer Leiterplatte (2) nach einem der vorherigen Ansprüche 7 bis 9 für ein Batteriepack mit Batteriezellen, insbesondere mit Lithium-Ionen-, Lithium-Eisenphosphat- und/oder Sodium- Batteriezellen, insbesondere bei deren serieller und/oder paralleler Verschaltung, insbesondere für eine Überwachung, eine Ausgleichung und/oder ein elektronisches Trennen einzelner oder aller Batteriezellen mittels Elektronikkomponenten wie Dioden, Sicherungen, MOSFETs und weiteren Komponenten.
